# EUROPEAN PATENT APPLICATION

(11) **EP 0 784 007 A1**
(43) Date of publication of application: **16.07.1997**
(21) Application number: 97100196.1
(22) Date of filing: 08.01.1997
(51) Int. Cl.: B62D 55/04

(54) **Track applicable to the driving wheels of a vehicle in general**

(30) Priority: 15.01.1996 IT BS960005
(71) Applicant: Zanola, Irene, 25035 Ospitaletto, Brescia (IT)
(72) Inventor: Zanola, Irene, 25035 Ospitaletto, Brescia (IT)
(74) Representative: Modiano, Guido, Dr.-Ing.

(57) **Abstract**

A track applicable to the driving wheels of a vehicle in general, including a framework (2,3) which supports two rollers (6,7), around which at least one track (8) winds continuously, and is provided with elements (20, 21, 22, 23) for detachable coupling to a driving wheel of a vehicle, elements (50, 51, 52; 62, 63, 64, 65, 66) for kinematic connection between the driving wheel and at least one of the rollers (6,7) being also provided.

## Description

The present invention relates to a track which can be applied to the driving wheels of a vehicle in general.

It is known that in order to allow the movement of vehicles, such as cars, motorcycles, trucks, and the like over rough, sandy, muddy, or snowy terrain or in the presence of steep gradients and of other difficult situations which cannot be dealt with otherwise, it is currently necessary to use tracked vehicles, i.e., vehicles which are already configured so as to have, as movement means, one or more tracks instead of conventional wheels.

Currently it is therefore not possible to perform conversions which allow to use, in the above-mentioned difficult conditions, a conventional vehicle, since the only modifications that are currently possible relate to the changing of the tires or to the application of snow chains and the like, which however are solutions that do not allow to radically solve the problem.

A principal aim of the invention is to solve the above-described problem by providing a track which can be applied to the driving wheels of a vehicle in general so as to allow to convert a conventional vehicle into a tracked vehicle.

Within the scope of this aim, a particular object of the invention is to provide a track which can be applied very easily and quickly to the wheels of a vehicle without requiring particular equipment or provisions.

Another object of the present invention is to provide a track which, by virtue of its particular constructive characteristics, is capable of giving the greatest assurances of reliability and safety in use.

Another object of the present invention is to provide a track which can be applied to the driving wheels of a vehicle in general, can be easily obtained starting from commonly commercially available elements and materials, and is also competitive from a merely economical point of view.

This aim, these objects, and others which will become apparent hereinafter are achieved by a track applicable to the driving wheels of a vehicle in general, characterized in that it comprises a framework which supports two rollers, around which at least one track winds continuously, and is provided with means for detachable coupling to a driving wheel of a vehicle, means for kinematic connection between said driving wheel and at least one of said rollers being also provided.

Further characteristics and advantages of the invention will become apparent from the following detailed description of two preferred but not exclusive embodiments of a track applicable to the driving wheels of a vehicle in general, illustrated only by way of non-limitative example in the accompanying drawings, wherein:
figure 1 is a schematic perspective view of a track according to the invention, with direct motion transmission;
figure 2 is an elevation side view of the track of figure 1;
figure 3 is a schematic front view of the track;
figure 4 is a schematic view of the central block for supporting the lateral roller and the engagement roller;
figure 5 is a schematic perspective view of a track with motion transmission provided by friction;
figure 6 is an elevation side view of the track of figure 5;
figure 7 is a front view of the track.

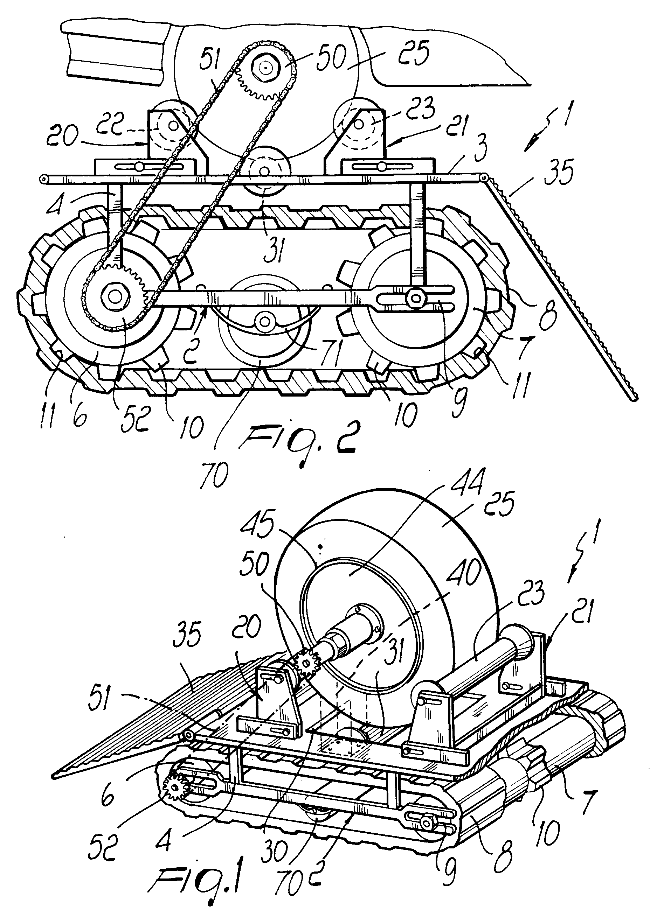

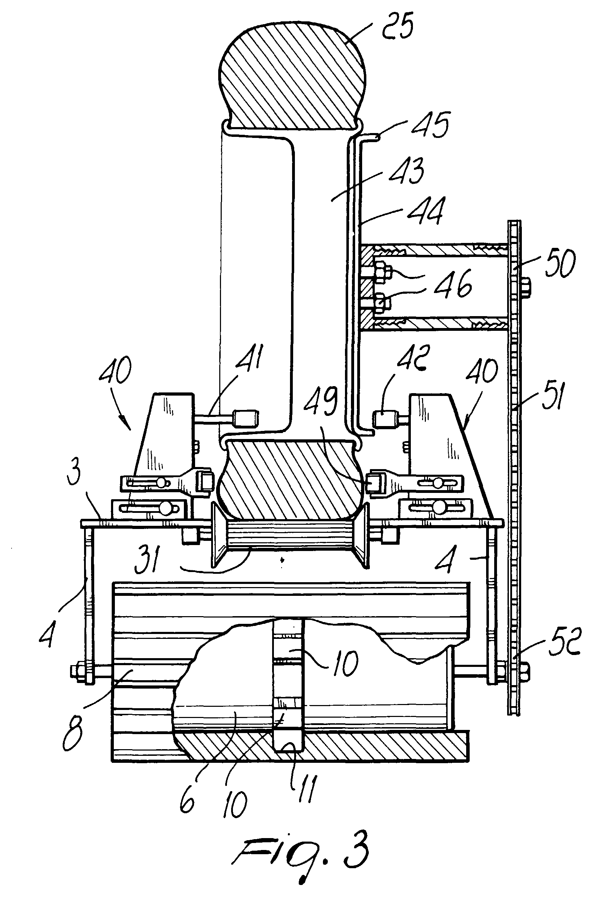

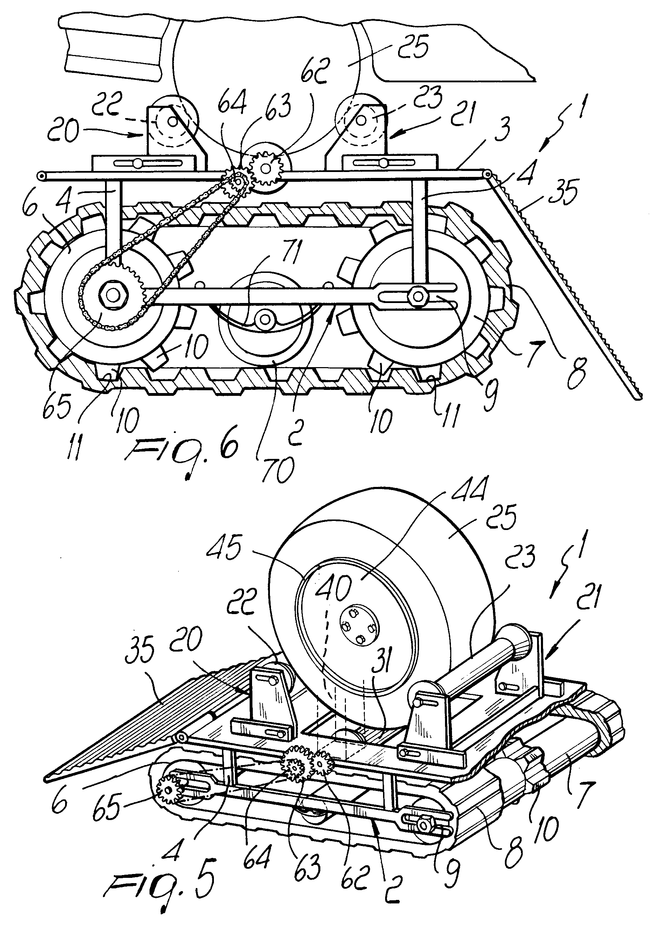

With reference to the above figures, and particularly to figures 1 to 4, the track applicable to the driving wheels of a vehicle in general, according to the invention, generally designated by the reference numeral 1, comprises a framework which is constituted by a frame 2 provided with a platform 3 in an upward region.

The frame 2 has sides 4 which support two rollers 6 and 7, around which at least one track, designated by the reference numeral 8, winds continuously.

In greater detail, the sides 4 have, at the region for supporting the rollers 6 and 7, fork-shaped seats, generally designated by the reference numeral 9, which allow to provide the desired tensioning of the track.

Moreover, the rollers 6 and 7 can have a toothed portion 10 which affects the central region of the roller, which engages at corresponding toothed seats 11 provided on the inner face of the track which winds around the rollers 6 and 7.

On the platform 3 there are provided means for detachable coupling to a driving wheel 25 which are constituted by a front containment block 20 and by a rear containment block 21; the blocks 20 and 21 respectively support a front containment roller 22 and a rear containment roller 23, which can slide in respective supporting slots formed by the blocks 20 and 21 so as to adapt to the size of the tire of a wheel.

At an opening 30 formed on the platform there is also provided a knurled roller 31 which is in close contact with the peripheral region of the tire, in its lower point.

It should be specified that the containment rollers and the knurled rollers have flanges at their axial end, so as to constitute a centering element for the tire.

A ramp 35 can be detachably connected, by means of locking pins, to the platform 3 at the front or at the rear and allows the wheel of the vehicle to climb onto the platform and to assume a correct position.

In order to couple the track 1 to the wheel there are provided engagement means which are provided by central blocks 40, which are arranged between the blocks 20 and 21 and respectively support an inner engagement roller 41 and an outer engagement roller 42 which have a horizontal axis. The inner engagement roller 41 engages the inner edge of the wheel 43, whilst the roller 42 engages a wheel trim 44 which has a protruding rim 45 and is fixed to the tire-supporting part of the wheel by means of nuts 46.

The rollers 41 and 42 are supported by plates 47 so that they can slide vertically by virtue of the presence of the vertical slots 48.

Lateral rollers 49 are furthermore provided on the blocks, are arranged with a vertical axis, and engage the sidewalls of the tire.

In order to transmit motion from the driving wheel 25 to the track, in the embodiment illustrated in figures 1 to 4 there is provided a driving gear 50, which is fixed to a hub connected to the wheel and around which a transmission chain 51 winds; the chain transfers the motion to a sprocket 52 which is keyed on the shaft of one of the rollers 6 or 7, so as to have direct motion transmission.

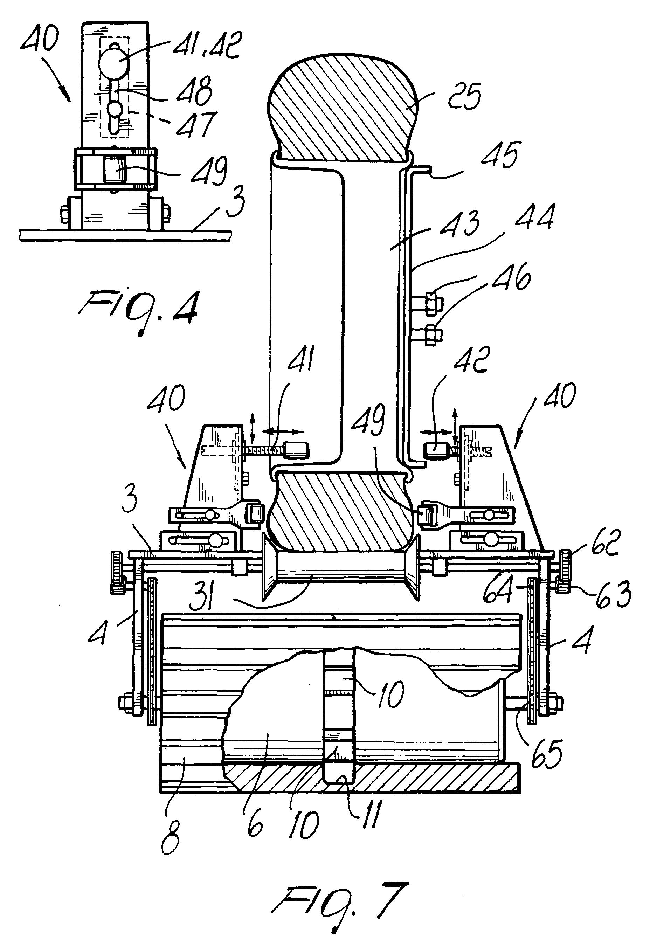

In the embodiments illustrated in figures 5 to 7, motion is transmitted by friction, and in this case the knurled roller 31, which is pressed against the wheel by friction, by means of a first transmission gear 62 rigidly coupled thereto, meshes with a kinematic reversing gear 63, which is in turn connected to a pinion 64 which, by means of a transmission chain 65, transmits the motion to a driving ring gear 66 keyed on the roller 6 or on the roller 7.

In this case, too, the rotation of the wheel, by turning the knurled roller 31, transmits the motion to the roller 6 and therefore to the track.

For the sake of completeness in description, it should also be added that there is provided a shock-absorbing roller 70 supported by a leaf spring 71 which acts on the inner face of the track 8.

In order to apply the tracks to the driving wheels of a vehicle it is sufficient to prepare the ramp at one of the ends of the platform 3 and to arrange it at the wheel to which the track must be applied, removing the corresponding front or rear containment roller or optionally the entire containment block, so as to facilitate climbing and positioning of the tire at the knurled roller 31.

In order to couple the track to the wheel, it is sufficient to slightly deflate the tire, so as to allow to insert the inner containment rollers and to couple the chain 51 in the embodiment illustrated in figures 1 to 4.

The tire is then inflated, so that it is firmly contained between the front and rear containment rollers 22, 23, between the inner and outer engagement rollers 41, 42, and the lateral rollers 49, so that extremely safe positioning is achieved.

Moreover, the tire is firmly pressed against the knurled roller 31, so that even in the version in which motion is transmitted by means of the knurled roller 31 there is no mutual slippage.

In order to perform disassembly, it is sufficient to slightly deflate the tires, repeating the above-described operations in reverse.

With the described arrangement, it is therefore possible to apply the track to the driving wheels of a vehicle, in practice converting it into a tracked vehicle; in the case of a four-wheel-drive vehicle, it is also possible to provide tracks on all four wheels.

Moreover, for travel over snow, in the case of rear-drive vehicles, it is optionally recommendable to provide skis applied at the front wheels.

From the above description it is thus evident that the invention achieves the intended aim and objects, and in particular the extreme simplicity of the invention, which can be applied very easily and quickly without any problem, is stressed.

The invention thus conceived is susceptible of numerous modifications and variations, all of which are within the scope of the inventive concept.

All the details may furthermore be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A track applicable to the driving wheels of a vehicle in general, characterized in that it comprises a framework which supports two rollers, around which at least one track winds continuously, and is provided with means for detachable coupling to a driving wheel of a vehicle, means for kinematic connection between said driving wheel and at least one of said rollers being also provided.

2. A track according to claim 1, characterized in that said framework comprises a frame which is provided, in an upward region, with a platform whereon said means for detachable coupling to a driving wheel are positioned.

3. A track according to claim 1, characterized in that said two rollers have at least one toothed surface portion which engages corresponding toothed seats formed on an inner face of said track.

4. A track according to claim 2, characterized in that said means for detachable coupling comprise a front and a rear containment blocks which support a respective containment roller, can be arranged at the outer surface of said driving wheel, and can be removed to position said wheel on said framework.

5. A track according to claim 4, characterized in that it comprises, on said platform, at least one opening in which at least one knurled roller is provided which can engage the peripheral region of the tire of the driving wheel.

6. A track according to claim 5, characterized in that said containment rollers and said at least one knurled roller have flanges at their axial ends.

7. A track according to claim 2, characterized in that it comprises a ramp which is detachably associable with said platform for the climbing and descent of the driving wheel of the vehicle.

8. A track according to claim 4, characterized in that said containment means comprise central blocks which are arranged between said front and rear containment blocks and support an inner and an outer engagement rollers which can rotate about a substantially horizontal axis and can engage the inner edge of the tire-supporting part of the driving wheel.

9. A track according to claim 8, characterized in that it comprises a wheel trim which has a protruding rim and can be fixed on the outer face of said tire-supporting part of the wheel to form the coupling region of said inner and outer engagement rollers.

10. A track according to claim 9, characterized in that it comprises a plate which supports said inner and outer engagement rollers and can slide in a vertical slot to allow the vertical adjustment of said inner and outer engagement rollers.

11. A track according to claim 1, characterized in that it comprises lateral rollers which can rotate about a substantially vertical axis and can engage the sidewalls of the tire.

12. A track according to claim 1, characterized in that said kinematic connecting means comprise a driving gear which is fixed to the hub of said driving wheel, a transmission chain engaging with said driving gear, said chain meshing with a ring gear which is keyed on one of the rollers that support said track.

13. A track according to claim 5, characterized in that said kinematic connecting means comprise a first transmission gear which is keyed on said knurled roller and meshes with a kinematic reversal gear which is in turn connected to a sprocket which, by means of a chain, transmits motion to a driving wheel keyed on one of said rollers of said track.

14. A track according to claim 1, characterized in that it comprises a shock-absorbing roller which is supported by the sides of said framework and can engage the inner face of said track.
